# EUROPEAN PATENT SPECIFICATION

(11) **EP 2 047 744 B1**
(45) Date of publication and mention of the grant of the patent: **14.07.2010**
(21) Application number: 07118378.4
(22) Date of filing: 12.10.2007
(51) Int. Cl.: A01K 27/00, A44B 11/22

(54) **Buckle for pet collar**
Schnalle für ein Tierhalsband
Boucle pour collier d'animal domestique

(43) Date of publication of application: 15.04.2009
(73) Proprietor: Wang, Chih-Hsin, 432 Dadu Shiang, Taichung County, Taiwan (CN)
(72) Inventor: Wang, Chih-Hsin, 432 Dadu Shiang, Taichung County, Taiwan (CN)
(74) Representative: Lang, Christian

(56) References cited:
- GB-A- 2 188 524
- NL-C- 104 297
- US-A- 2 783 516
- DATABASE WPI Week 200225 Derwent Publications Ltd., London, GB; AN 2002-193464 XP002465611 & JP 2002 034381 A (HEISEI KK) 5 February 2002 (2002-02-05)

## Description

### BACKGROUND OF THE INVENTION

### (1) FIELD OF THE INVENTION

The present invention relates to a pet collar with a plastic buckle which allows the user to easily secure the collar at three different positions.

### (2) DESCRIPTION OF THE PRIOR ART

A conventional pet collar generally includes a belt and a buckle which is usually made by metal and one end of the belt is fixed to the buckle and the other end of the belt passes through the buckle and a tongue on the buckle extends through one of the holes in the belt. Such buckles one known from US-A-2783516. The metal buckle requires several manufacturing steps including forming a specific shape and electro-plating, and a special machine is required to connect the tongue to the frame of the buckle. The metal buckle is heavy and the manufacturing cost is high which cannot meet the customers' needs. Besides, the tongue extends inclinedly through the hole in the belt and the tongue can be disengaged from the hole when pulling the pet collar.

The present invention intends to provide a pet collar with a plastic buckle which includes three protrusions so that the belt can be positioned at three positions when buckled.

### SUMMARY OF THE INVENTION

The present invention relates to a pet collar which comprises a buckle with a through hole defined therethrough and a first transverse bar and a second transverse bar are connected to two sidewalls extending from two opposite sides of the buckle so as to define a first opening between the first transverse bar and a first end of the buckle, a second opening defined between the second transverse bar and a second end of the buckle. A first protrusion extends from a top of the first transverse bar and two second protrusions extend from two respectively undersides of the first and second ends of the buckle. A belt has a first end fixed to a second end of the buckle and a second end of the belt extends through the first opening via the underside of the first end of the buckle and passes over the first and second transverse bars and extends through the second opening. The belt has a plurality of holes and the first protrusion and the two second protrusions are engaged with three of the holes in the belt.

The subject-matter of the present invention is a pet collar, comprising:
a buckle with a through hole defined therethrough and a first transverse bar and a second transverse bar connected to two sidewalls extending from two opposite sides of the buckle, a first protrusion extending from a top of the first transverse bar, a first opening defined between the first transverse bar and a first end of the buckle, a second opening defined between the second transverse bar and a second end of the buckle, two second protrusions extending from two respectively undersides of the first and second ends of the buckle, and
a belt having a first end fixed to a second end of the buckle and a second end of the belt extending through the first opening via the underside of the first end of the buckle and passing over the first and second transverse bars and extending through the second opening, the belt having a plurality of holes and the first protrusion and the two second protrusions engaged with three of the holes in the belt.

Each of the first and second protrusions preferably includes an enlarged end on a distal end thereof.

Preferably, a distance between the first protrusion and the second protrusion on the first end of the buckle is the same as a distance between the first protrusion and the second protrusion on the second end of the buckle.

Preferably, a distance between adjacent holes in the belt is the same as the distance between the first protrusion and the two second protrusions.

The first end of the belt preferably extends through the second opening via the underside of the second end of the buckle and goes around the second transverse bar and is fixed to the belt.

A keeper is preferably connected to the first end of the belt. The buckle is preferably made by plastic. The two sidewalls are preferably shorter than a length of the buckle.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 is a perspective view to show the buckle of the pet collar of the present invention;
Fig. 2 is a part of the pet collar of the present invention;
Fig. 3 is a cross sectional view of the buckle of the pet collar of the present invention;
Fig. 4 is a cross sectional view of the part of the pet collar in Fig. 2;
Fig. 5 is a perspective view to show the pet collar with the belt is not yet connected to the buckle, and
Fig. 6 shows that decoration is made on the buckle of the pet collar of the present invention.

### DETAILED DESCRIPTION OF THE PREFERRED EMBODIMENTS

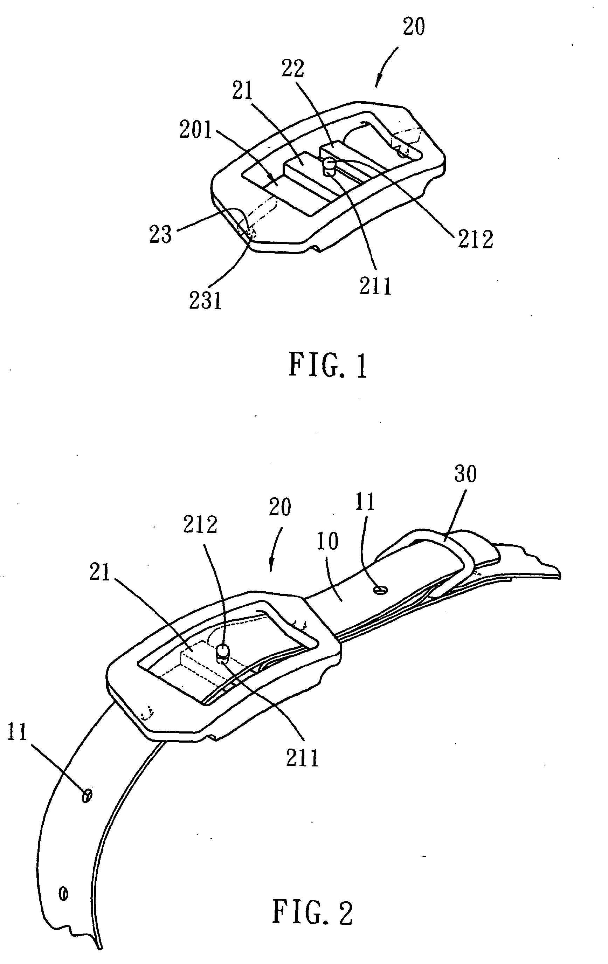

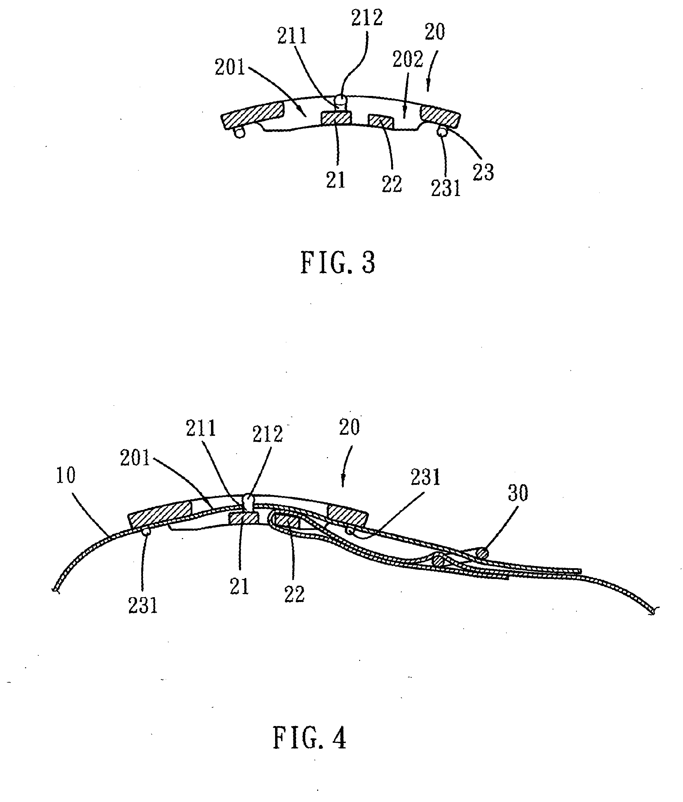

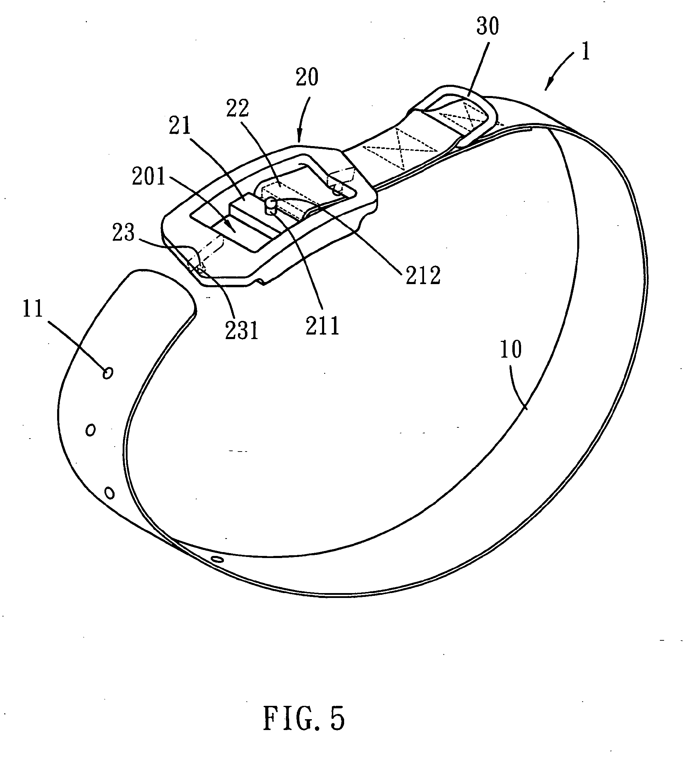

Referring to Figs. 1 to 5, the pet collar of the present invention comprises a buckle 20 which is made by plastic material and includes a through hole defined therethrough. A first transverse bar 21 and a second transverse bar 22 are connected to two sidewalls extending from two opposite sides of the buckle 20. A first protrusion 211 extends from a top of the first transverse bar 21 and two second protrusions 23 extend from two respectively undersides of the first and second ends of the buckle 20. A first opening 201 is defined between the first transverse bar 21 and the first end of the buckle 20 and a second opening 202 is defined between the second transverse bar 22 and the second end of the buckle 20. Each of the first and second protrusions 211, 23 includes an enlarged end 212/231 on a distal end thereof.

A belt 10 has a first end thereof extends through the second opening 202 via the underside of the second end of the buckle 20 and goes around the second transverse bar 22 and is fixed to the belt 10. A second end of the belt 10 extends through the first opening 201 via the underside of the first end of the buckle 20 and passes over the first and second transverse bars 21, 22 and extends through the second opening 202. The second end of the belt 10 then extends through a keeper 30 connected to the first end of the belt 10. The belt 10 has a plurality of holes 11 and the first protrusion 211 and the two second protrusions 23 engaged with three of the holes 11 in the belt 10.

It is noted that the distance between the first protrusion 211 and the second protrusion 23 on the first end of the buckle 20 is the same as the distance between the first protrusion 211 and the second protrusion 23 on the second end of the buckle 20. The distance between adjacent holes 11 in the belt 10 is the same as the distance between the first protrusion 211 and the two second protrusions 23. Therefore, the use can easily mount the three holes 11 to the first and second protrusions 211 and 23. The two sidewalls are shorter than a length of the buckle 20 so as to form an open space beneath the two ends of the buckle 20 and the open spaces are convenient for the user to check the engagement of the holes in the belt 10 and the first protrusion 211 and the two second protrusions 23.

The belt 10 is mounted to the first protrusion 211 form the top of the buckle 20 and the belt 10 is mounted to the two second protrusions 23 from the underside of the buckle 20. The opposite directions of engagement ensure that the first and second protrusions 211, 23 are not easily disengaged from the holes 11 of the belt 10 when pulling the pet collar.

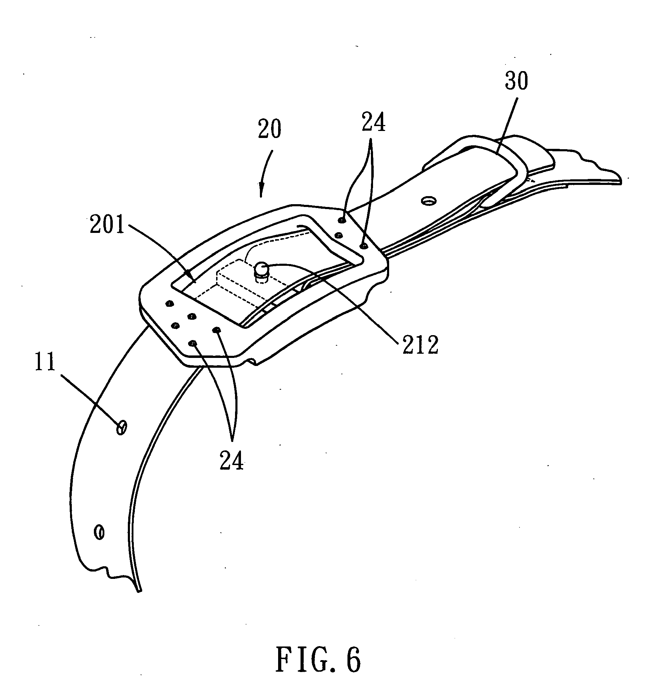

Fig. 6 shows that decorations 24 can be made on the buckle 20 and the decorations 24 can be gems.

## Claims

1. A pet collar, comprising:
a buckle (20) with a through hole defined therethrough and a first transverse bar (21) and a second transverse bar (22) connected to two sidewalls extending from two opposite sides of the buckle (20), a first protrusion (211) extending from a top of the first transverse bar (21), a first opening (201) defined between the first transverse bar (21) and a first end of the buckle (20), a second opening (202) defined between the second transverse bar (22) and a second end of the buckle (20) **characterised by** two second protrusions (23) extending from two respectively undersides of the first and second ends of the buckle (20), and
a belt (10) having a first end fixed to a second end of the buckle (20) and a second end of the belt (10) extending through the first opening (201) via the underside of the first end of the buckle (20) and passing over the first (21) and second (22) transverse bars and extending through-the second opening (202), the belt (10) having a plurality of holes (11) and the first protrusion (211) and the two second protrusions (23) engaged with three of the holes (11) in the belt (10).

2. The pet collar as claimed in claim 1, wherein each of the first (211) and second (23) protrusions includes an enlarged end (212; 231) on a distal end thereof.

3. The pet collar as claimed in claim 1, wherein a distance between the first protrusion (211) and the second protrusion (23) on the first end of the buckle (20) is the same as a distance between the first protrusion (211) and the second protrusion (23) on the second end of the buckle (20).

4. The pet collar as claimed in claim 3, wherein a distance between adjacent holes (11) in the belt (10) is the same as the distance between the first protrusion (211) and the two second protrusions (23).

5. The pet collar as claimed in claim 1, the first end of the belt (10) extends through the second opening (202) via the underside of the second end of the buckle (20) and goes around the second transverse bar (22) and is fixed to the belt (10).

6. The pet collar as claimed in claim 1, wherein a keeper (30) is connected to the first end of the belt (10).

7. The pet collar as claimed in claim 1, wherein the buckle (20) is made by plastic.

8. The pet collar as claimed in claim 1, wherein the two sidewalls are shorter than a length of the buckle (20).

## Patentansprüche

1. Halsband für Haustiere, umfassend:
eine Schnalle (20) mit einer Durchgangsöffnung, die dort hindurch definiert ist, und einen ersten Querbalken (21) und einen zweiten Querbalken (22), die mit zwei Seitenwänden, die sich von zwei gegenüberliegenden Seiten der Schnalle (20) erstrecken, verbunden sind, einen ersten Vorsprung (211), der sich von der Oberseite des ersten Querbalkens (21) erstreckt, eine erste Öffnung (201), die zwischen dem ersten Querbalken (21) und einem ersten Ende der Schnalle (20) definiert ist, eine zweiten Öffnung (202), die zwischen dem zweiten Querbalken (22) und einem zweiten Ende der Schnalle (20) definiert ist,
**gekennzeichnet durch**
zwei zweite Vorsprünge (23), die sich jeweils von zwei Unterseiten des ersten und zweiten Endes der Schnalle (20) erstrecken, und
einem Riemen (10), der ein erstes Ende aufweist, das an einem zweiten Ende der Schnalle (20) fixiert ist, und ein zweites Ende des Riemens (10) erstreckt sich **durch** die erste Öffnung (201) über die Unterseite des ersten Endes der Schnalle (20) und ist über den ersten (21) und zweiten (22) Querbalken geführt und erstreckt sich **durch** die zweite Öffnung (202), wobei der Riemen (10) eine Vielzahl an Öffnungen (11) aufweist und der erste Vorsprung (211) und die zweiten Vorsprünge (23) mit drei Öffnungen (11) mit dem Riemen (10) in Eingriff stehen.

2. Halsband für Haustiere nach Anspruch 1,
**dadurch gekennzeichnet, dass**
jeder der ersten (211) und zweiten (23) Vorsprünge ein vergrößertes Ende (212, 231) an ihrem distalen Ende aufweist.

3. Halsband für Haustiere nach Anspruch 1,
**dadurch gekennzeichnet, dass**
eine Distanz zwischen dem ersten Vorsprung (211) und dem zweiten Vorsprung (23) an dem ersten Ende der Schnalle (20) gleich einer Distanz zwischen dem ersten Vorsprung (211) und dem zweiten Vorsprung (23) an dem zweiten Ende der Schnalle (20) ist.

4. Halsband für Haustiere nach Anspruch 3,
**dadurch gekennzeichnet, dass**
eine Distanz zwischen benachbarten Öffnungen (11) in dem Riemen (10) gleich zu der Distanz zwischen dem ersten Vorsprung (211) und den zweiten Vorsprüngen (23) ist.

5. Halsband für Haustiere nach Anspruch 1,
**dadurch gekennzeichnet, dass**
sich das erste Ende des Riemens (10) durch die zweite Öffnung (202) über die Unterseite des zweiten Endes der Schnalle (20) erstreckt und um den zweiten Querbalken (22) verläuft und am Riemen (10) fixiert ist.

6. Halsband für Haustiere nach Anspruch 1,
**dadurch gekennzeichnet, dass**
eine Schlaufe (30) mit dem ersten Ende des Riemens (10) verbunden ist.

7. Halsband für Haustiere nach Anspruch 1,
**dadurch gekennzeichnet, dass**
die Schlaufe (20) aus Kunststoff hergestellt ist.

8. Halsband für Haustiere nach Anspruch 1,
**dadurch gekennzeichnet, dass**
die zwei Seitenwände kürzer sind als eine Länge der Schnalle (20).

## Revendications

1. Collier d'animal domestique, comprenant :
une boucle (20) traversée par un trou traversant défini et une première barre transversale (21) et une seconde barre transversale (22) reliées à deux parois latérales s'étendant hors de deux côtés opposés de la boucle (20), une première protubérance (211) s'étendant hors d'un côté supérieur de la première barre transversale (21), une première ouverture (201) définie entre la première barre transversale (21) et une première extrémité de la boucle (20), une seconde ouverture (202) définie entre la seconde barre transversale (22) et une seconde extrémité de la boucle (20), **caractérisée par** deux secondes protubérances (23) s'étendant hors de deux côtés inférieurs respectivement des première et seconde extrémités de la boucle (20) ; et
une sangle (10) ayant une première extrémité fixée à une seconde extrémité de la boucle (20) et une seconde extrémité de la sangle (10) s'étendant à travers la première ouverture (201) via le côté inférieur de la première extrémité de la boucle (20) et passant au-dessus des première (21) et seconde (22) barres transversales et s'étendant à travers la seconde ouverture (202), la sangle (10) ayant une pluralité de trous (11) et la première protubérance (211) et les deux secondes protubérances (23) étant imbriquées avec trois des trous (11) dans la sangle (10).

2. Collier d'animal domestique selon la revendication 1, dans lequel chacune des première (211) et seconde (23) protubérances comprend une extrémité élargie (212 ; 231) sur une de ses extrémités distales.

3. Collier d'animal domestique selon la revendication 1, dans lequel une distance entre la première protubérance (211) et la seconde protubérance (23) sur la première extrémité de la boucle (20) est identique à la distance entre la première protubérance (211) et la seconde protubérance (23) sur la seconde extrémité de la boucle (20).

4. Collier d'animal domestique selon la revendication 3, dans lequel une distance entre les trous adjacents (11) réalisés dans la sangle (10) est identique à la distance entre la première protubérance (211) et les deux secondes protubérances (23).

5. Collier d'animal domestique selon la revendication 1, dans lequel la première extrémité de la sangle (10) s'étend à travers la seconde ouverture (202) via le côté inférieur de la seconde extrémité de la boucle (20), entoure la seconde barre transversale (22) et est fixée à la sangle (10).

6. Collier d'animal domestique selon la revendication 1, dans lequel un passant (30) est relié à la première extrémité de la sangle (10).

7. Collier d'animal domestique selon la revendication 1, dans lequel la boucle (20) est en plastique.

8. Collier d'animal domestique selon la revendication 1, dans lequel les deux parois latérales sont plus courtes qu'une longueur de la boucle (20).
